(19) Europäisches Patentamt
European Patent Office
Office européen des brevets

(11) Publication number: 0 191 543
A1

(12) EUROPEAN PATENT APPLICATION

(21) Application number: 86300111.1

(22) Date of filing: 08.01.86

(51) Int. Cl.⁴: A 01 N 55/00

(30) Priority: 15.01.85 US 691745

(43) Date of publication of application: 20.08.86 Bulletin 86/34

(84) Designated Contracting States: AT BE CH DE FR GB IT LI LU NL SE

(71) Applicant: VENTEC LABORATORIES, INC.,
2284 Enterprise Drive, Mt. Pleasant Michigan 48858 (US)

(72) Inventor: Levier, Robert R., 213 North Sancher Mt. Pleasant, Michigan 48858 (US)

(74) Representative: Brown, John David et al, FORRESTER & BOEHMERT Widenmayerstrasse 4/I, D-8000 München 22 (DE)

(54) **Silicone insect toxicants.**

(57) This invention relates to a method of controlling insects an spiders through the use of silicon-containing compounds chosen from the group consisting of cyclic siloxanes, silanes, siloxane-glycol copolymers, siloxane-alkylene oxide copolymers, linear siloxanes and hydroxyl alkyl disiloxanes. The present invention is useful against a wide range of insects and related organisms including household insects, ectoparasites of plants and ectoparasites of animal and man, and has been shown effective against these organisms at all stages of maturation including adult, larvae or nymphs and eggs.

EP 0 191 543 A1

0191543

"Silicone Insect Toxicants"

This invention relates to a method of controlling insects and spiders through the use of silicon-containing compounds chosen from the group consisting of cyclic siloxanes, silanes, siloxane-glycol copolymers, siloxane-alkylene oxide copolymers, linear siloxanes and hydroxyl alkyl disiloxanes. The present invention is useful against a wide range of insects and related organisms including household insects, ectoparasites of plants and ectoparasites of animal and man, and has been shown effective against these organisms at all stages of maturation including adult, larvae or nymphs and eggs.

## BACKGROUND

There exists a need for toxicants for insects and spiders which are safe for even direct application on humans, animals and plants, and yet are effective poisons against these pests at all stages of maturation including adults, larvae or nymphs and eggs. Despite this long-felt need, such toxicants are not currently available. The present invention satisfies this need by providing a method of controlling "household" insects and spiders and ectoparasites of both plants and animals which involves the use of compounds which are extremely effective, long-acting and stable and which are completely safe for use on, or around, humans.

Many silicon-containing compounds are considered to be biologically inert. For instance, LeVier, et al., The Pharmacology of Silanes and Siloxanes, in Biochemistry of Silicon and Related Problems, pp. 473-514 (Plenum Publishing Corp. 1978), which provides an excellent review of organo-silicon chemistry and the biological activity of silicon-containing compounds, points out that silicones have been particularly effective biomaterials in applications where inertness

is absolutely required. The biological inertness of dimethicone copolyol, one of the compounds found to be particularly effective for use in practicing the present invention, is attested to in Final Report on the Safety Assessment of Dimethicone Copolyol in Journal of the American College of Toxicology, pp. 33-54 (Vol. I, No. 4, 1982). This report states that dimethicone copolyol has little effect on living systems and that many silicone compounds do not easily cross membrane barriers.

U.S. Patent No. 2,988,473 (Mallis, et al.) discloses that the effectiveness of insecticides containing hydrocarbon oil can be increased by the incorporation therein of a small amount of a liquid condensation product of an organo-silicon oxide compound. U.S. Patent No. 4,155,995 (Heinz, et al.) similarly discloses that the effectiveness of petroleum oil mosquito toxicants can be increased by the addition of small amounts of a dialkyl polysiloxane and an ethoxylated monoalkyl phenyl. Neither of these patents teaches that silicon-containing products are useful as insect toxicants outside of the mixtures described in the patents.

U.S. Patent No. 4,146,619 (Lover, et al.) discloses the use of linear alkyl and aryl substituted siloxanes as toxicants for lice and their ova. This patent does not suggest that any of the compounds found to be effective in the methods of the present invention would be useful insect and spider toxicants.

## Detailed Description

The present invention provides a unique and highly effective method of controlling noxious insects and spiders which is safe for use in any environment. This method comprises contacting insects and spiders with one or more silicon-containing toxicants selected from the group consisting of:

(i) cyclic siloxanes having the formula

$(R_2SiO)_n$

wherein each R is independently selected from the group consisting of aryls, alkyls, gamma-halogenated aryls, gamma-halogenated alkyls, aminated aryls, aminated alkyls, carboxylated aryls, carboxylated alkyls and alkylene oxides, and n is an integer not less than 3;

(ii) silanes having the formula

$R_4Si$ or $(R_3SiO)_xR_{4-x}Si$

wherein each R is independently selected from the group consisting of aryls, alkyls, gamma-halogenated aryls, gamma-halogenated alkyls, aminated aryls, aminated alkyls, carboxylated aryls, carboxylated alkyls and alkylene oxides, and x is an integer not less than 1 or greater than 4;

(iii) siloxane-glycol copolymers having the formula

$$R_3SiO(R_2SiO)_x(\underset{\displaystyle |\atop \displaystyle CH_3H_5O(C_2H_4O)_m(Ch_3C_2H_3O)_nH}{RSiO})_ySiR_3$$

or

$$R\text{-}Si\text{-}[-(OSiR_2)_zC_3H_5O(C_2H_4O)_m(CH_3C_2H_3O)_nH]_3$$

wherein each R is a lower alkyl; x, y and z are integers not less than 1; and m and n are positive integers or 0;

(iv) siloxane-alkylene oxide copolymers having the formula

$$R_3SiO(R_2SiO)_m(C_xH_{2x}O)_nSiR_3$$

wherein each R is a lower alkyl; and m, n and x are integers not less than 1;

(v) siloxanes having the formula

$$R^1{}_3SiO(R^1R^2SiO)_nSiR^1{}_3$$

wherein each $R^1$ is a lower alkyl; $R^2$ is a gamma-halogenated aryl, gamma-halogenated alkyl,

aminated aryl, aminated alkyl, carboxylated aryl or carboxylated alkyl; and n is an integer not less than 1; and

(vi) hydroxy alkyl disiloxanes having the formula

$$[HO(C_xH_{2x})R_2Si-]_2-O$$

wherein each R is a lower alkyl and x is an integer not less than 1.

Included among the compounds found useful in practice of the present invention are hexa(hexyl, methyl)cyclotrisiloxane, hexa(3,3,3,-trifluoropropyl, methyl)cyclotrisiloxane, octa(3,3,3-trifluoropropyl, methyl)cyclotrisiloxane, deca(methyl, ethyl)cyclopentasiloxane, tetradecylmethylcycloheptasiloxane, methylphenyldimethoxysilane, dimethicone copolyol, dimethylsiloxane-ethylene oxide copolymer, polymethyl-3,3,3-trifluoropropylsiloxane, 1,3 bis(2-hydroxyethyl)-tetramethyldisiloxane and tetrakis(trimethylsiloxy)-silane. All these compounds are commercially available from Petrarch Systems, Bristol, Pennsylvania. In addition, dimethicone copolyol is sold under the trade-marks "Dow Corning® 190 and 193" by Dow Corning corporation, Midland Michigan, and under the trademark "Rhodorsil® Fluid 3193" by Rhone-Poulenc, Inc., Monmouth Junction, New Jersey.

The methods of the present invention have been shown to be effective against a large number of insect and spider pests and it is believed based on the physiological similarities within these groups that these methods will be active against all insects and spiders. Further, the instant invention can be used to kill insects and spiders at any stage of maturation.

More specifically, among the "household" insects and spiders, the methods of the present invention are useful for controlling crickets

(Order-Orthoptera, Family-Gryllidae), ants (Order-Hymenoptera, Family-Formicidae), cockroaches (Order-Dictyoptera, Families-Cryptoceridae, Blattidae, Polyphagidae), silverfish (Order-Thysanura, Family-Lepismatidae), and spiders (Order-Arachnida, All Families). Among the ectoparasites of plants, the methods of the present invention are useful for controlling mealybugs (Order-Hemiptera, Family-Pseudococcidae), aphids (Order-Hemiptera, Families-Aphidae, Pemphigidae, Adelgidae), whiteflys (Order-Hemiptera, Family-Aleyrodidae), scales (Order-Hemiptera, Super Family-Coccoidae) and spiders (Order-Arachnida, All Families). Among the ectoparasites of animals and men, the methods of the present invention are useful for controlling fleas (Order-Siphonaptera, Family-Pulicidae), ticks (Suborder-Metastigmata, All Families), mites (Order-Astigmata, Families-Psoroptidae, Sarcoptidae, Demodicidae) and lice (Order-Mallaphago, Families-Philopteridae; Order-Anoplura, Families-Haematopinidea, Pediculidae, Linognathidae).

Contact between the toxicant and the target organism sought to be controlled can be achieved by various means according to the method of the present invention. One or more of the silicon-containing toxicants could be incorporated into a spray or dip, or contact could be achieved through release from a substrate such as a sponge or a treated bait. It should be understood that these toxicants could be employed alone or in mixtures containing other toxicants and with or without an appropriate solvent, diluent or emulsifier.

Example 1

Adult brown crickets (Acheta domesticus) were obtained from a local breeder and maintained for a short period in glass aquariums containing egg cartons. The food supply consisted of sliced potatoes.

Test compounds which were not soluble in water were applied without dilution to the ventral thorax using a microliter syringe. The treated insects were maintained for 24 hours and observed periodically for the purpose of recording mortality. Water-soluble test compounds were dissolved in water. Crickets were immersed in these solutions for 30 seconds followed by holding in plastic containers for 24 hours. Results are shown in Table 1.

Table 1

| Compound | Method of Application | Approximate $LD_{50}$ |
|---|---|---|
| Polydimethylsiloxane (10 cs.) | Direct to thorax | 0.87 ul |
| Tetradecylmethyl-cycloheptasiloxane | Direct to thorax | 1.07 ul |
| Tetrakis(trimethyl-siloxy) silane | Direct to thorax | 1.07 ul |
| Deca(methyl, ethyl) cyclopentasiloxane | Direct to thorax | 1.56 ul |
| Hexa(hexyl, methyl) cyclotrisiloxane | Direct to thorax | 1.08 ul |
| Mixed Hexa(3,3,3-trifluoropropyl, methyl) trisiloxane and Octa (3,3,3-trifluoropropyl, methyltetrasiloxane | Direct to thorax | 0.70 ul |
| Polymethyl-3,3,3-trifluoropropyl-siloxane (300 cs.) | Direct to thorax | 3.70 ul |
| 1,3 Bis(2-hydroxy-ethyl) tetramethyl-disiloxane | Direct to thorax | 2.71 ul |
| Methylphenyldime-thoxysilane | Direct to thorax | 2.09 ul |
| Dimethicone copolyol (465 cs.) (75% Non-siloxane (w/w)) | Immersion | 0.25% (v/v) |
| Dimethylsiloxane-ethylene oxide co-polymer (20 cs.) (75% Non-siloxane (w/w)) | Immersion | 0.004% (v/v) |

Polydimethylsiloxane was evaluated for confirmation of the activity claimed in U.S. Patent No. 4,146,619 (discussed above). All of the compounds tested against crickets exhibited a toxicant action and are of approximately equal potency.

## Example 2

Adult brown crickets (Acheta domesticus) were exposed to three compounds in an aquarium test. For each compound, two groups of 24 crickets were placed in aquariums along with several paper towels and a plastic disc containing a mixture of bait and a test compound. The bait consisted of a 2:1 mixture of flour and sugar to which the test compound was added to form a slurry. Depending upon the compound, the ratio to bait was from 1:1 to 2:1. Mortality was recorded over a 48 hour period. Results are shown in Table 2.

Table 2

| Compound | Approximate $LT_{50}$* |
|---|---|
| Tetradecylmethylcycloheptasiloxane | 8.5 hrs. |
| Dimethicone copolyol (465 cs.) (75% Non-siloxane (w/w/)) | 33.0 hrs. |
| Dimethylsiloxane-ethylene oxide copolymer (20 cs.) (75% Non-siloxane (w/w)) | 4.0 hrs. |

*Time it took for fifty percent of the test organisms to die.

The activity of tetradecylmethylcycolhepta-siloxane and of the two water soluble siloxane copolymers paralleled their activity by direct application. The toxicant activity of dimethicone copolyol emerged slowly while the dimethylsiloxane-ethylene oxide copolymer was distinctly more effective. These three compounds appeared to be without either attractant or feeding-inhibition activity.

Example 3

Adult alfalfa weevils (Hypera postica) were collected from Michigan fields in late fall and refrigerated for about one month before testing. Groups of adults were placed in a screened cage and immersed for 30 seconds in test solutions comprising the toxicant in water. The cage was blotted and the weevils transferred to a petri dish containing a filter paper disk. Mortality was recorded over a 48 hour period.

Larvae were hatched from fall-collected alfalfa weevil eggs and tested in the second instar stage. The treatment method and holding container were identical to those described for adults. Mortality was recorded over a 48 hour period.

Stems containing alfalfa weevil eggs were split longitudinally and the egg clusters were allowed to remain in position in the hollow stem. The stems were placed in a screened cage and immersed in test solutions for 30 seconds. The stems were then removed to a piece of moist filter paper in a petri dish and the eggs were incubated at 22±2°C until hatching at 7-8 days. Mortality was based on the number of unhatched eggs or death of the larvae upon hatching.

Results are shown in Table 3.

Table 3

| Compound | Form Treated | Approximate $LD_{50}$ (% (v/v) Test Compound in Water) |
|---|---|---|
| Dimethicone copolyol (465 cs.) (75% Non-siloxane (w/w)) | Adults | 20.4 |
| | Larvae | 8.4 |
| | Eggs | 59.6 |
| Dimethylsiloxane-ethylene oxide copolymer (20 cs.) (75% Non-siloxane (w/w)) | Adults | 3.2 |
| | Larvae | 0.9 |
| | Eggs | 29.2 |

These results verify that the tested compounds are effective toxicants against insects at any stage of maturation.

Example 4

Adult feline fleas (Ctenacephalides felis) were placed on an 2cm. x 2cm. coarse nylon patch and immersed in test solutions comprising the test compound in water for 1 minute followed by draining on filter paper. The fleas were transferred to a glass container. Mortality was recorded periodically for 24 hours.

Feline flea eggs were placed in a filter paper funnel and immersed in test solutions for 1 minute followed by draining for 1 minute and held in the funnel for an additional 15 minutes. The apex of the filter paper funnel containing the eggs was then removed and placed in a petri dish. The eggs were recounted and covered with culture medium. The eggs and hatched larvae were observed periodically for 15 days for mortality and evidence of cocoon formation.

Results are shown in Table 4.

Table 4

| Compound | Form Treated | Approximate $LD_{50}$ (% (w/w) Test Compound in Water) |
|---|---|---|
| Dimethicone copolyol (454 cs.) (75% Non-siloxane (w/w)) | Adults | 25.00 |
| Dimethylsiloxane-ethylene oxide copolymer (20 cs.) (75% Non-siloxane (w/w)) | Adults | 0.17 |
| | Eggs | 7.80 |

It is evident that adult feline fleas and their eggs are sensitive to the action of the dimethylsiloxane-ethylene oxide copolymer. The greater insecticidal activity possessed by this dimethylsiloxane-alkylene oxide block copolymer compared to the branched

copolymer, dimethicone copolyol, may be dependent upon the configuration of the polymer in solution. It is believed that these polymers orient in water to maximize the alkylene/water interface and minimize the dimethylsiloxane/water interface by internalizing the dimethylsiloxane phase. More biologically active dimethylsiloxane character is presented to the integument of the target organism in the case of solubilized dimethylsiloxane-ethylene oxide copolymer than with the dimethicone copolyol.

Example 5

Due to the relatively poor performance of the dimethicone copolyol solutions used in previous experiments, further tests were run utilizing this compound. Adult brown crickets (Acheta domesticus) were submersed in freshly prepared water solutions of dimethicone copolyol for 30 seconds followed by a 30 second water rinse. The approximate $LD_{50}$ was 3.4% (v/v). The same test solutions were held for eight (8) days and used again. The $LD_{50}$ was much higher indicating that the insecticidal activity of this polymer in water is not stable over time. The polymer in water solutions used in Example 4 were not fresh. Therefore, the approximate $LD_{50}$ reported for dimethicone copolyol in water solutions in Table 4 is probably much higher than would be obtained if freshly prepared solutions had been tested.

In light of this finding, the activity of dimethicone copolyol against crickets and dog fleas was evaluated using propylene glycol as the diluent. Adult brown crickets were submersed in dimethicone copolyol/propylene glycol solutions for 30 seconds followed by a 30 second water rinse. The approximate $LD_{50}$ for groups of 12 adults was 0.03%. This activity did not degrade when solutions were stored at room temperature for eight days. Finally, solutions of

dimethicone copolyol in propylene glycol were applied directly to individual adult fleas on an infested dog. The $LD_{50}$ was estimated to be about 15%. There is knockdown of fleas at lower concentrations followed by recovery within 15 minutes.

The results of these experiments demonstrate that a broad range of silicone monomers, oligomers and polymers are capable of exerting a lethal toxic action against divergent species of insects. Prior and less formal experiments have demonstrated a lethal toxic action against ants, cockroaches, spiders, moths, various species of beetles, centipedes, mealworm larvae and adults, and feline ear mites.

Numerous modifications and variations in practice of the invention as exemplified in the above-illustrative examples are expected to occur to those skilled in the art and consequently only such limitations as appear in the appended claims should be placed thereon.

The features disclosed in the foregoing description and in the following claims may, both separately and in any combination thereof, be material for realising the invention in diverse forms thereof.

CLAIMS

1. A method of controlling insects and spiders which comprises contacting said insects and spiders with one or more silicon-containing toxicants selected from the group consisting of:

(i) cyclic siloxanes having the formula

$(R_2SiO)_n$

wherein each R is independently selected from the group consisting of aryls, alkyls, gamma-halogenated aryls, gamma-halogenated alkyls, aminated aryls, aminated alkyls, carboxylated aryls, carboxylated alkyls and alkylene oxides, and n in an integer not less than 3;

(ii) silanes having the formula

$R_4Si$ or $(R_3SiO)_xR_{4-x}Si$

wherein each R is independently selected from the group consisting of aryls, alkyls, gamma-halogenated aryls, gamma-halogenated alkyls, aminated aryls, aminated alkyls, carboxylated aryls, carboxylated alkyls, and alkylene oxides, and x is an integer not less than 1 or greater than 4;

(iii) siloxane-glycol copolymers having the formula

$$R_3SiO(R_2SiO)_x(\underset{\displaystyle C_3H_5O(C_2H_4O)_m(CH_3C_2H_3O)_nH}{\underset{|}{RSiO}})_ySiR_3$$

or

$$R\text{-}Si\text{-}[-(OSiR_2)_zC_3H_5O(C_2H_4O)_m(CH_3C_2H_3O)_nH]_3$$

wherein each R is a lower alkyl; x, y and z are integers not less than 1; and m and n are positive integers or 0;

(iv) siloxane-alkylene oxide copolymers having the formula

$$R_3SiO(R_2SiO)_m(C_xH_{2x}O)_nSiR_3$$

wherein each R is a lower alkyl; and m, n and x are integers not less than 1;

(v) siloxanes having the formula

$R^1{}_3SiO(R^1R^2SiO)_nSiR^1{}_3$

wherein each $R^1$ is a lower alkyl; $R^2$ is a gamma-halogenated aryl, gamma-halogenated alkyl, aminated aryl, aminated alkyl, carboxylated aryl or carboxylated alkyl; and n is an integer not less than 1; and

(vi) hydroxy alkyl disiloxanes having the formula

$[HO(C_xH_{2x})R_2Si]_2O$

wherein each R is a lower alkyl and x is an integer not less than 1.

2. The method of claim 1 wherein said toxicant is a cyclic siloxane chosen from the group consisting of hexa (hexyl, methyl)cyclotrisiloxane; hexa(3,3,3-trifluoropropyl methyl)cyclotrisiloxane; octa(3,3,3-trifluoropropyl, methyl)cyclotetrasiloxane; deca(methyl, ethyl)cyclopentasiloxane and tetradecylmethylcycloheptasiloxane.

3. The method of claim 1 wherein said toxicant is methylphenyldimethoxysilane.

4. The method of claim 1 wherein the toxicant is dimethicone copolyol.

5. The method of claim 1 wherein said toxicant is dimethylsiloxane-ethylene oxide copolymer.

6. The method of claim 1 wherein said toxicant is polymethyl-3,3,3-trifluoropropylsiloxane.

7. The method of claim 1 wherein said toxicant is 1,3 bis(2-hydroxy ethyl)tetramethyldisiloxane.

8. The method of claim 1 wherein said toxicant is tetrakis(trimethylsiloxy)silane.

9. The method of claim 4 wherein said toxicant is employed in a propylene glycol solution.

10. The method of claim 5 wherein said toxicant is employed in an aqueous solution.

11. The use of one or more silicon-containing toxicants selected from those defined in Claim 1 for controlling insects and spiders.

12. Use of one or more silicon-containing toxicants selected from those defined in Claim 1 for the manufacture of an insecticide for controlling insects, spiders and/or ectoparasites.

European Patent Office

# EUROPEAN SEARCH REPORT

0191543

Application number

EP 86 30 0111

| Category | Citation of document with indication, where appropriate, of relevant passages | Relevant to claim | CLASSIFICATION OF THE APPLICATION (Int. Cl.4) |
|---|---|---|---|
| D,X | US-A-4 146 619 (M.J. LOVER et al.)<br>* Whole document *<br>--- | 1,4,10-12 | A 01 N 55/00 |
| X | CHEMICAL ABSTRACTS, vol. 101, no. 7, 13th August 1984, page 207, no. 50157f, Columbus, Ohio, US; & JP - A - 59 39 809 (SHIN-ETSU CHEMICAL INDUSTRY CO., LTD.) 05-03-1984<br>* Whole abstract *<br>--- | 1,2,11,12 | |
| X | CHEMICAL ABSTRACTS, vol. 101, no. 1, 2nd July 1984, page 209, no. 2333p, Columbus, Ohio, US; & JP - A - 59 39 808 (SHIN-ETSU CHEMICAL INDUSTRY CO., LTD.) 05-03-1984<br>* Whole abstract *<br>--- | 1,4,11,12 | TECHNICAL FIELDS SEARCHED (Int. Cl.4) |
| A | CHEMICAL ABSTRACTS, vol. 99, no. 15, 10th October 1983, page 254, no. 117878c, Columbus, Ohio, US; & JP - A - 58 90 502 (KUMIAI CHEMICAL INDUSTRY CO., LTD.) 30-05-1983<br>* Whole abstract *<br>--- | 1,11,12 | A 01 N |
| A | GB-A-2 026 511 (DOW CORNING)<br>* Page 1, line 13 - page 2, line 65; claims *<br>--- -/- | 1,6,11,12 | |

The present search report has been drawn up for all claims

| Place of search | Date of completion of the search | Examiner |
|---|---|---|
| THE HAGUE | 28-04-1986 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

European Patent Office

# EUROPEAN SEARCH REPORT

0191543

Application number

EP 86 30 0111

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | CHEMICAL ABSTRACTS, vol. 82, no. 9, 3rd March 1975, page 584, no. 57805p, Columbus, Ohio, US; E. LUKEVICS et al.: "Nitrogen-containing organosilicon compounds. XLIX. Synthesis and insect repellent properties of silicon substituted (organylaminomethyl) silane of the series Men(RO)3-nSiCH2N-R1R2", & KHIM.-FARM. ZH. 1974, 8(10), 29-32 * Whole abstract * --- | 1,11, 12 | |
| D,A | US-A-2 988 473 (A. MALLIS et al.) * Column 7, lines 37-59 * --- | 1,11, 12 | |
| D,A | US-A-4 155 995 (H.D. HEINZ et al.) * Column 3, lines 6-32; claims * ----- | 1,11, 12 | TECHNICAL FIELDS SEARCHED (Int. Cl.4) |

The present search report has been drawn up for all claims

| Place of search | Date of completion of the search | Examiner |
|---|---|---|
| THE HAGUE | 28-04-1986 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document